# EUROPÄISCHE PATENTSCHRIFT

(11) **EP 3 725 588 B1**
(45) Veröffentlichungstag und Bekanntmachung des Hinweises auf die Patenterteilung: **05.10.2022**
(21) Anmeldenummer: 20168347.1
(22) Anmeldetag: 07.04.2020
(51) Int. Cl.: B60N 2/62, B60R 7/04, B60N 2/68

(54) **FAHRZEUGSITZ FÜR EIN KRAFTFAHRZEUG**
VEHICLE SEAT FOR A MOTOR VEHICLE
SIÈGE DE VÉHICULE POUR UN VÉHICULE AUTOMOBILE

(30) Priorität: 15.04.2019 DE 102019205421
(43) Veröffentlichungstag der Anmeldung: 21.10.2020
(73) Patentinhaber: Volkswagen Aktiengesellschaft, 38440 Wolfsburg (DE)
(72) Erfinder: Busch, Christian, 38112 Braunschweig (DE); Cafaro, Mirna, 38118 Braunschweig (DE); Walter, Helmut, 38162 Cremlingen (Weddel) (DE); Lahl, Benedikt, 31224 Peine (DE); Pyatov, Nikita, 38102 Braunschweig (DE); Hartmann, Stephan, 39128 Magdeburg (DE)

(56) Entgegenhaltungen:
- DE-A1-102009 040 901
- DE-A1-102010 042 881
- DE-A1-102016 124 515
- DE-A1-102017 119 713
- DE-B4-102010 042 881
- DE-U1-202006 019 341

## Beschreibung

Die Erfindung betrifft einen Fahrzeugsitz für ein Kraftfahrzeug, mit einem Sitzgestell, an welchem ein Sitzteil gelagert ist und welches an einem Fahrzeugboden befestigbar oder befestigt ist, mit wenigstens einem einer Unterseite des Sitzteils zugeordneten Ablagefach, wobei das Sitzteil zwischen einer das Ablagefach verdeckenden Sitzposition und einer das Ablagefach freigebenden Aufstellposition verschwenkbar gelagert ist, und mit einer Verriegelungseinrichtung zum Verriegeln des Sitzteils in der Sitzposition, wobei die Verriegelungseinrichtung ein Verriegelungselement und einen Betätigungsgriff zum Bewegen des Verriegelungselements von einer das Sitzteil an dem Sitzgestell arretierenden Arretierstellung in eine das Sitzteil zum Verlagern in die Aufstellposition freigebende Freigabestellung aufweist.

Fahrzeugsitze der eingangs genannten Art sind aus dem Stand der Technik bereits bekannt. So offenbart beispielsweise die Offenlegungsschrift DE 10 2005 010 434 A1 einen Fahrzeugsitz mit den Merkmalen des Oberbegriffs des Anspruchs 1. Aus den Offenlegungsschriften DE 10 2009 052 594 A1, DE 37 05 059 A1 und DE 102 38 838 A1 sind bereits Fahrzeugsitze mit aufstellbaren Sitzteilen bekannt. Aus der Offenlegungsschrift DE 10 2013 009 329 A1 ist ein Fahrzeugsitz bekannt, bei welchem das Staufach als Schublade unterhalb eines Sitzteils ausgebildet ist.

Ein gattungsgemäßer Fahrzeugsitz ist auch aus der Offenlegungsschrift DE 10 2017 119 713 A1 bekannt. Weiterhin offenbart die Patentschrift DE 10 2010 042 881 B4 einen Fahrzeugsitz ohne Ablagefach, der eine verrastbare Betätigungseinrichtung für eine Schenkelstütze aufweist.

Der Erfindung liegt die Aufgabe zugrunde, einen verbesserten Fahrzeugsitz zu schaffen, der eine einfache Montage und eine sichere Arretierung des Sitzteils in der Sitzposition gewährleistet.

Die der Erfindung zugrundeliegende Aufgabe wird durch einen Fahrzeugsitz mit den Merkmalen des Anspruchs 1 gelöst. Dieser hat den Vorteil, dass die Verriegelungseinrichtung einfach montierbar ist und einen sicheren Halt des Sitzteils an dem Sitzgestell gewährleistet. Dabei ist die Verriegelungseinrichtung selbst kostengünstig realisierbar und mit wenigen Einzelteilen darstellbar. Erfindungsgemäß ist dazu vorgesehen, dass die Verriegelungseinrichtung an einer Sitzwanne des Sitzteils formschlüssig verrastet ist. Die Verriegelungseinrichtung ist also durch eine Verrastung an dem Sitzteil beziehungsweise an dessen Sitzwanne gehalten. Durch die Verrastung ist eine einfache Montage ermöglicht, die insbesondere ohne zusätzliche Befestigungsmittel erfolgen kann. Die beispielsweise vormontierte Verriegelungseinrichtung wird dazu zur Montage an der Sitzwanne einfach an diese herangeführt und verrastet, ohne dass nachträglich eine Verschraubung, Vernietung oder dergleichen vorgenommen werden muss. Dadurch wird die Anzahl der Einzelteile für den Fahrzeugsitz reduziert und die Montage vereinfacht. Durch die Verrastung, die einen formschlüssigen Sitz der Verriegelungsanordnung an der Sitzwanne gewährleistet, ist außerdem eine feste Verbindung zwischen Verriegelungseinrichtung und Sitzwanne gewährleistet, welche robust ist und eine hohe Lebensdauer gewährleistet.

Gemäß einer bevorzugten Weiterbildung der Erfindung ist die Verriegelungseinrichtung nur durch zumindest bereichsweise elastisch verformbare Rastmittel an der Sitzwanne befestigt. Durch die elastische Verformbarkeit der Rastmittel ist ein Aufstecken oder Anstecken der Verriegelungseinrichtung, insbesondere ein Anklipsen der Verriegelungseinrichtung an die Sitzwanne ohne weitere Hilfsmittel möglich. Durch die Eigenelastizität der Rastmittel schnappen diese in eine die Sitzwanne formschlüssig greifende, insbesondere hintergreifende, Position, in welcher die Verriegelungseinrichtung dann formschlüssig an der Sitzwanne gehalten ist. Insbesondere sind die elastisch verformbaren Rastmittel als elastisch verlagerbare Rastnasen ausgebildet, die mit Rastöffnungen der Sitzwanne und/oder der Verriegelungseinrichtung zusammenwirken. Die Rastmittel können grundsätzlich an der Verriegelungseinrichtung und/oder an der Sitzwanne ausgebildet oder befestigt sein. Vorzugsweise sind die Rastmittel einstückig mit der Sitzwanne oder einem Bestandteil der Verriegelungseinrichtung ausgebildet.

Erfindungsgemäß weist die Sitzwanne mehrere Stützwände auf, welche in die Verriegelungseinrichtung aufgesteckt oder aufgelegt ist. Durch die Stützwände ist eine einfache Anordnung der Verriegelungseinrichtung an der Sitzwanne gewährleistet. Insbesondere sind die Stützwände derart ausgebildet, dass sie eine versteifende Stützstruktur für die Sitzwanne ausbilden. Dazu erstrecken sich die Stützwände beispielsweise geradlinig entlang einer Oberseite oder Unterseite der Sitzwanne derart, dass sie sich sternförmig und/oder rautenförmig kreuzen. In dem Bereich, in welchem die Verriegelungseinrichtung angeordnet ist, sind die Stützwände bevorzugt verkürzt ausgebildet, sodass die Verriegelungseinrichtung in die Sitzwanne integrierbar ist, sodass sie zumindest im Wesentlichen in die Sitzwanne eingebettet ist, und insbesondere nicht über die übrigen Stützwände hinaus vorsteht.

Weiterhin ist bevorzugt vorgesehen, dass der Betätigungsgriff einen Drehbolzen aufweist, der in einer randoffenen Laderöffnung von zumindest zwei einander gegenüberliegend angeordneten Stützwänden drehbar gelagert ist. Die Drehlagerung des Betätigungsgriffs wird somit durch die Stützwände selbst mitgebildet, sodass auch hier die Teilezahl reduziert wird. Durch die randoffene Ausbildung der Lageröffnung ist ein einfaches Einlegen des Drehbolzens in die Lageröffnung gewährleistet. Der Drehbolzen des Betätigungsgriffs kann dabei einteilig oder zweiteilig ausgebildet sein, wobei bei einer zweiteiligen Ausbildung die Drehbolzenteile getrennt beziehungsweise beabstandet voneinander vorliegen können, jedoch fluchtend zueinander ausgerichtet sind.

Weiterhin ist bevorzugt vorgesehen, dass die Verriegelungseinrichtung einen Träger aufweist, der auf mehreren der Stützwände direkt oder indirekt aufliegt und einen Schieber lagert, der mit dem Betätigungsgriff einerseits und mit dem Verriegelungselement andererseits wirkverbunden ist. Der Betätigungsgriff und Verriegelungselement miteinander verbindende Schieber ist also an oder in einem Träger der Verriegelungseinrichtung gelagert, wobei der Träger auf den Stützwänden aufliegt. Damit liegt der Träger bevorzugt zumindest bereichsweise direkt auf den Stützwänden auf oder indirekt und insbesondere unter Zwischenschaltung des Schiebers, sodass der Schieber zwischen dem Träger und den Stützwänden geführt ist. Besonders bevorzugt sind die zuvor erwähnten Rastmittel an dem Träger insbesondere einstückig ausgebildet, sodass über den Träger die Arretierung der Verriegelungseinrichtung an der Sitzwanne realisiert oder mitrealisiert ist. Durch den Träger ist eine sichere Führung des Schiebers und damit eine sichere Betätigung des Betätigungsgriffs gewährleistet. Vorzugsweise sind an dem Träger auch der Betätigungsgriff und/oder das Verriegelungselement gehalten, sodass der Träger zusammen mit diesen eine Vormontagebaugruppe der Verriegelungseinrichtung bildet, die eine einfache Montage an dem Sitzteil gewährleistet.

Vorzugsweise bildet der Träger eine Schienenführung für den Schieber, beispielsweise zusammen mit der Sitzwanne. Durch die Schienenführung wird eine Linearführung für den Schieber geboten, die eine sichere Betätigung des Verriegelungselements durch den Betätigungsgriff gewährleistet.

Vorzugsweise ist der Schieber zwischen dem Träger einerseits und der Sitzwanne andererseits verschiebbar geführt, wie vorstehend bereits erwähnt. Dadurch ergibt sich, dass der Schieber sicher zwischen Träger und Sitzwanne gehalten ist. Alternativ ist der Schieber allein an dem Träger geführt, wodurch der Träger dann die Schienenführung für den Schieber alleine ausbildet, beispielsweise indem er ein C-förmiges Querschnittsprofil aufweist, in welches der Schieber eingeschoben ist.

Gemäß einer bevorzugten Weiterbildung der Erfindung weist der Träger mehrere elastisch verformbare Rastnasen als Rastmittel auf, die in Rastöffnungen der Sitzwanne, insbesondere Stützwanne eingreifen. Dadurch ergibt sich ein einfaches Anklipsen des Trägers an die Sitzwanne, wie vorstehend bereits erwähnt. Durch das Vorsehen der Rastmittel an dem Träger und der Rastöffnungen an der Sitzwanne ist eine einfache Gestaltung von Träger und Sitzwanne möglich, die eine kostengünstige Herstellung des Fahrzeugsitzes ermöglicht.

Weiterhin ist bevorzugt vorgesehen, dass das Verriegelungselement ein Verriegelungshaken ist, der dazu ausgebildet ist, mit einem an dem Sitzgestell befestigten Sitzbügel in der Arretierstellung zusammenzuwirken, wobei der Verriegelungshaken durch den Betätigungsgriff und den Schieber in die Freigabestellung verschwenkbar ist. Der verschwenkbare Verriegelungshaken wird somit durch die Betätigung des Betätigungsgriffs bedient, um von der Arretierstellung in die Freigabestellung verschwenkt zu werden. Durch den Verriegelungshaken ist ein vorteilhaftes Hintergreifen des Sitzbügels geboten, das einen sicheren Halt des Sitzteils in der Sitzposition gewährleistet.

Bevorzugt ist der Verriegelungshaken durch den Schieber nur mit einer Druckkraft beaufschlagbar. Dadurch ergibt sich, dass der Verriegelungshaken auch unabhängig von dem Schieber in die Freigabestellung verschwenkbar ist. Dies ist insbesondere dann von Vorteil, wenn das Sitzteil von der Aufstellposition in die Sitzposition verschwenkt wird. Durch die vorteilhafte Ausbildung ist der Verriegelungshaken unabhängig von einem Schieber in die Freigabestellung verschwenkbar, sodass er insbesondere auch eine entsprechende Formgebung durch den Sitzbügel beim Verschwenken des Sitzteils in die Sitzposition automatisch in die Freigabestellung verschoben wird, um anschließend den Sitzbügel wieder zu hintergreifen.

Bevorzugt weist die Verriegelungseinrichtung zumindest eine Rückstellfeder auf, die einer Betätigung des Betätigungsgriffs entgegenwirkt. Dadurch ist ein ungewolltes Lösen der Verriegelung einfach verhindert. Darüber hinaus wird der Vorteil erreicht, dass der Betätigungsgriff durch die Rückstellfeder in seine Ausgangsstellung zurückgelangt und die Verriegelung sicherstellt.

Gemäß einer bevorzugten Weiterbildung der Erfindung ist die Rückstellfeder an der Sitzwanne einerseits und an einem von dem Betätigungsgriff abgewandten Ende des Schiebers andererseits befestigt und als Zugfeder ausgebildet. Durch die Zugkraft zieht die Rückstellfeder den Betätigungsgriff vorteilhafterweise in seine Ausgangsposition und zwar unabhängig von der Stellung des Verriegelungshakens. Dazu ist das andere Ende der Rückstellfeder an dem Schieber und nicht an dem Haken befestigt. Dadurch wird die zuvor beschriebene Funktion, der automatischen Verlagerung des Verriegelungshakens in die Freigabestellung beim Verschwenken des Sitzteils in die Sitzposition weiter gewährleistet.

Besonders bevorzugt ist die Sitzwanne mit den Stützwänden aus Kunststoff gefertigt und insbesondere einstückig mit diesen ausgebildet. Dadurch ergibt sich eine einfache und kostengünstige Herstellung der Sitzwanne.

Vorzugsweise ist an der Sitzwanne zumindest ein Verstärkungsblech, insbesondere ein Organoblech, zur Verstärkung der Kunststoffsitzwanne angeordnet. Hierdurch weist die Sitzwanne zum einen ein geringes Gewicht auf und ist zum anderen robust und belastbar.

Besonders bevorzugt ist die Sitzwanne an das Organoblech angespritzt, sodass das Organoblech vorteilhaft in den Kunststoff der Sitzwanne integriert ist, wodurch sich eine besonders feste Verbindung zwischen Sitzwanne und Organoblech ergibt.

Im Folgenden soll die Erfindung anhand der Zeichnungen näher erläutert werden. Dazu zeigen
- Figur 1: einen Fahrzeugsitz für ein Kraftfahrzeug in einer vereinfachten Darstellung,
- Figur 2: eine vergrößerte Draufsicht auf den Fahrzeugsitz,
- Figur 3: eine schematische Seitenansicht und
- Figur 4: eine Schnittdarstellung durch den Fahrzeugsitz.

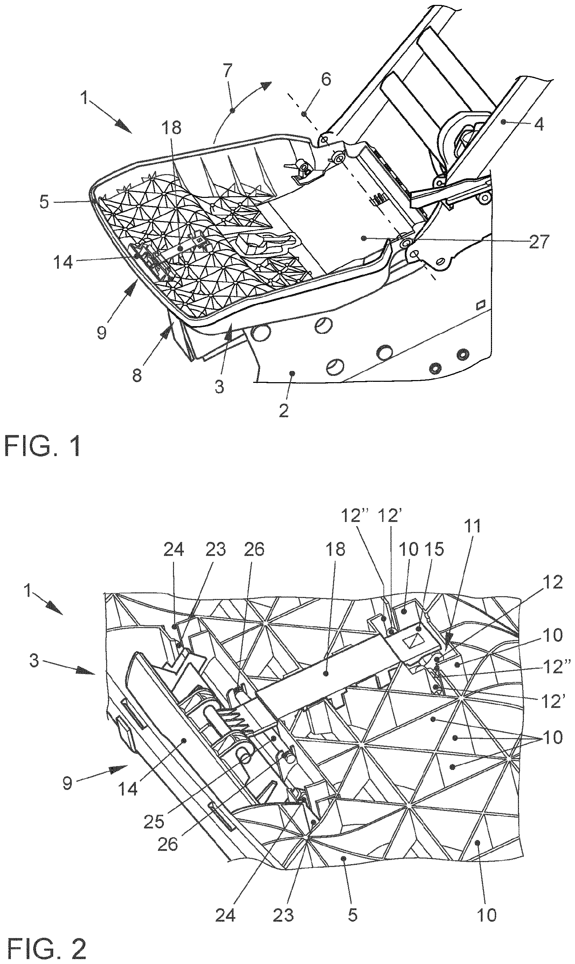

Figur 1 zeigt in einer vereinfachten perspektivischen Darstellung einen Fahrzeugsitz 1 für ein hier nicht näher dargestelltes Kraftfahrzeug. Der Fahrzeugsitz 1 weist ein Sitzgestell 2 auf, das beispielsweise an einem Boden eines Kraftfahrzeugs befestigbar ist. Das Sitzgestell trägt ein Sitzteil 3 sowie eine Rückenlehne 4, die in dem vorliegenden Ausführungsbeispiel ohne Sitzbezüge oder -polster dargestellt sind. Das Sitzteil 3 weist eine Sitzwanne 5 auf, die als Träger für die Bepolsterung dient, und welche an einem der Rückenlehne 4 zugewandten Ende um eine Horizontalachse 6 verschwenkbar gelagert ist. Dabei ist das Sitzteil 3 zwischen einer Sitzposition, wie sie in Figur 1 gezeigt ist, und einer hochgestellten Aufstellposition verschwenkbar, wie durch einen Pfeil 7 in Figur 1 angezeigt. An dem Sitzgestell 2 ist außerdem ein Ablagefach 8 angeordnet, das sich insbesondere unterhalb des Sitzteils 3 befindet. Eine Zugangsöffnung zu dem Ablagefach 8 wird durch das Sitzteil 3 in der in Figur 1 gezeigten Sitzposition verdeckt. Um an das Ablagefach 8 zu gelangen, ist das Sitzteil 3 in die Aufstellposition zu verschwenken, sodass das Ablagefach 8 freigegeben ist.

Damit das Sitzteil 3 im Normalfall in der Sitzposition verbleibt, weist es eine Verriegelungseinrichtung 9 auf, die an der Sitzwanne 5 angeordnet ist. Figur 2 zeigt hierzu in einer vergrößerten Draufsicht auf das Sitzteil 3 die Verriegelungseinrichtung 9. Die Sitzwanne 5 ist vorteilhafterweise zumindest im Wesentlichen aus Kunststoff gefertigt und weist an ihrer Oberseite eine Stützstruktur aus zumindest im Wesentlichen gradlinig über die Oberfläche verlaufenden und vertikal ausgerichteten Stützwände 10, die sich mehrfach, beispielsweise kreuzweise, sternartig oder rautenförmig kreuzen. Auf diese Stützwände 10 ist die Verriegelungseinrichtung 9 aufgesteckt und formschlüssig zu ihrer Halterung damit verbunden.

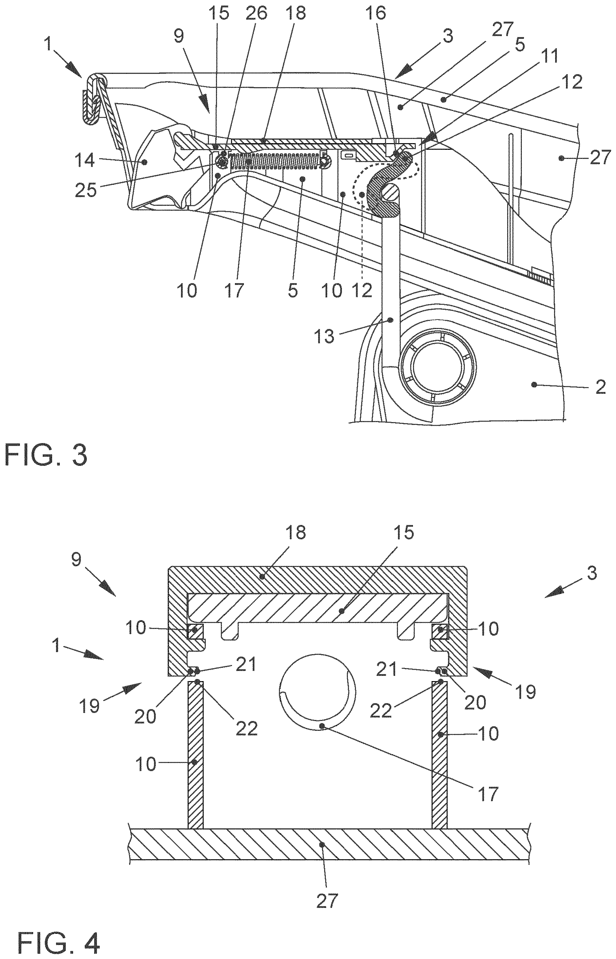

Figur 3 zeigt eine vereinfachte Seitenansicht des Fahrzeugsitzes 1 im Bereich der Verriegelungseinrichtung 9, um deren Aufbau und Funktion näher zu erläutern.

Die Verriegelungseinrichtung 9 weist ein verlagerbares Verriegelungselement 11 auf, das gemäß dem vorliegenden Ausführungsbeispiel als verschwenkbarer Verriegelungshaken 12 ausgebildet ist. Der Verriegelungshaken 12 weist dabei bevorzugt einen Drehbolzen 12' auf, der beidseits des Verriegelungshakens 12 in randoffenen Aussparungen 12" voneinander gegenüberliegend angeordneten Stützwänden 10 verschwenkbar eingelegt ist. Dazu weisen die Aussparungen bevorzugt jeweils einen an den Drehbolzen 12' angepasst gekrümmten Boden auf, um eine vorteilhafte Drehbewegung mit geringem Verschleiß und geringem Spiel zu gewährleisten. Der Verriegelungshaken 12 ist dazu ausgebildet, mit einem Bügelelement 13, das an dem Sitzgestell 2 befestigt ist, zusammenzuwirken. Dazu ist der Verriegelungshaken 12 von einer das Bügelelement 13 hintergreifenden Arretierstellung und einer das Bügelelement 13 freigebenden Freigabestellung verschwenkbar. In der Arretierstellung hält das Verriegelungselement 12 die Verriegelungseinrichtung und damit die Sitzwanne 5 in der Sitzposition. In der Freigabestellung ist ein Anheben des Sitzteils 3 auf der von der Rückenlehne abgewandten Ende möglich, um das darunterliegende Ablagefach 8 freizugeben. Die Verriegelungseinrichtung 9 weist weiterhin ein Betätigungsgriff 14 auf, der verschwenkbar an dem Sitzteil 2 gelagert ist. Insbesondere sind der Betätigungsgriff 14 und der Verriegelungshaken 12 jeweils um eine horizontale Achse verschwenkbar. Vorzugsweise sind die Horizontalachsen von Betätigungsgriff 14 und Verriegelungshaken 12 parallel zueinander ausgerichtet.

Die Verriegelungseinrichtung 9 weist weiterhin einen Schieber 15 auf, der einendig mit dem Betätigungsgriff 14 gekoppelt ist und anderendig mit dem Verriegelungshaken 12 zusammenwirkt. Dabei ist der Schieber 15 mit dem Betätigungsgriff 14 derart formschlüssig gekoppelt, dass er stets mit dem Betätigungsgriff 14 mitbewegt wird. Dazu ist der Schieber 15 einendig schwenkgelenkig mit dem Betätigungsgriff 14 verbunden. Mit dem Verriegelungshaken 12 ist der Schieber 15 hingegen nicht zwangsgeführt gekoppelt, sondern derart wirkverbunden, dass er lediglich eine Druckkraft auf den Verriegelungshaken 12 zu dessen Verlagerung an die Freigabestellung aufbringen kann. Dazu weist der Schieber 15 an seinem dem Verriegelungshaken 12 zugewandten Ende eine Anlaufschräge 16 auf, welche beim Verlagern des Schiebers 15 in Richtung des Verriegelungshakens 12 dazu führt, dass der Verriegelungshaken 12 in die Freigabestellung verdreht wird, wie in Figur 3 durch eine gestrichelte Darstellung des Verriegelungshakens 12 in der Freigabestellung gezeigt.

Die Verriegelungseinrichtung 9 weist weiterhin eine Rückstellfeder 17 auf, die gemäß dem vorliegenden Ausführungsbeispiel als Zugfeder ausgebildet ist. Die Rückstellfeder 17 ist einendig an der Sitzwanne 5 befestigt und anderendig mit dem Schieber 15 gekoppelt, sodass die Rückstellfeder 17 einem Verschieben des Schiebers 15 in Richtung des Verriegelungshakens 6 entgegenwirkt. Damit wirkt die Rückstellfeder 17 auch auf den Betätigungsgriff 14 derart, dass dieser durch die Kraft der Rückstellfeder 17 in seine in Figur 3 gezeigte Ausgangsstellung gedrängt wird. Die Rückstellfeder 17 ist dabei beispielsweise an einem Lagerbolzen 25 befestigt, der jeweils in einer randoffenen Lageröffnung 26 von zwei Stützwänden 10 der Sitzwanne 5 eingelegt ist, wie in Figuren 3 und 2 gezeigt.

Der Schieber 15 ist in einem Träger 18 der Verriegelungseinrichtung 9 verschiebbar gelagert. Hierzu zeigt Figur 4 eine vereinfachte Schnittdarstellung durch die Verriegelungseinrichtung 9. Der Träger 18 weist ein C-förmiges Profil auf, in welches der Schieber 15 eingeschoben ist. Dabei weist der Schieber 15 eine Breite auf, die nahe zu der lichten Weite des Trägers 18 entspricht, sodass der Schieber 15 seitlich an dem Träger 18 vorteilhaft geführt ist, dass er stets gerade bewegt wird. Vorliegend liegt der Schieber 15 an seiner Oberseite an der Unterseite des Trägers 18 an und liegt an seiner Unterseite auf der Oberseite von zwei parallel zueinander ausgerichteten Stützwänden 10 der Sitzwanne 5 auf. Damit ist der Schieber 15 durch die Sitzwanne 5 einerseits und den Träger 18 andererseits linear geführt.

Der Träger 18 selbst weist mehrere vertikal ausgerichtete und elastisch verformbare Rastmittel 19 auf, die beidseitig entlang seiner Längserstreckung beabstandet zueinander verteilt angeordnet sind. Die Rastmittel 19 sind jeweils als Rastnasen 20 ausgebildet, die elastisch nach außen gedrängt werden können. Die Rastnasen 20 weisen an ihrer Frontseite jeweils eine Anlaufschräge 21 auf, durch welche Rastnasen 20 automatisch nach außen gedrängt werden, wenn sie auf die jeweilige Stützwand 15 treffen. Die Stützwände 10 weisen selbst Rastöffnungen 22 auf, die dazu dienen, die Rastnasen 20 derart aufzunehmen, dass die Rastnasen die Stützwände 10 zumindest bereichsweise hintergreifen und dadurch eine formschlüssige Arretierung des Trägers 18 an den Stützwänden 10 gewährleisten. Der Träger 18 ist somit durch ein einfaches Aufstecken auf die Stützwände 10 der Sitzwanne 5 an dieser durch eine formschlüssige Verrastung arretierbar.

Der Betätigungsgriff 14 weist einen Drehbolzen 23 auf, wie in Figur 2 gezeigt, der zweiteilig ausgebildet ist, wobei jeder Drehbolzen 23 in jeweils einer randoffenen Lageraussparung 24 von zwei einander gegenüberliegend angeordneten Stützwänden 10 der Sitzwanne 5 einliegt, sodass ein Drehlager gebildet ist. Die Drehbolzenteile 23 sind dazu fluchtend miteinander ausgebildet und insbesondere einstückig mit dem Betätigungsgriff 14 ausgebildet. Der Betätigungsgriff 14 ist somit an der Sitzwanne 5 verschwenkbar gelagert und mit dem Schieber 15 gelenkig gekoppelt. Auch der Verriegelungshaken 12 ist bevorzugt gelenkig an dem Träger 18 verschwenkbar gelagert, sodass die Verriegelungseinrichtung 9 insgesamt vormontierbar ist und durch ein einfaches Aufstecken auf die Stützwände 10 der Sitzwanne 5 an dem Sitzteil 2 befestigbar beziehungsweise befestigt ist. Dadurch ist eine einfache Montage sowie eine einfache Handhabung der Verriegelungseinrichtung 9. Zudem werden nur wenige Teile benötigt, insbesondere wird auf das zusätzliche Vorsehen von Schrauben oder andere Befestigungsmittel verzichtet, sodass die Teilezahl geringgehalten wird.

Zur Verstärkung der Sitzwanne 5 weist diese bevorzugt außerdem ein Verstärkungsblech, insbesondere ein Organoblech 27 auf, das von der Sitzwanne 5 zumindest bereichsweise eingefasst ist. Insbesondere ist die aus Kunststoff gefertigte Sitzwanne 5 an das Organoblech 27 angespritzt, sodass das Organoblech 27 vorteilhaft in die Sitzwanne 5 integriert ist.

### Bezugszeichenliste

- 1: Fahrzeugsitz
- 2: Sitzgestell
- 3: Sitzteil
- 4: Rückenlehne
- 5: Sitzwanne
- 6: Horizontalachse
- 7: Pfeil
- 8: Ablagefach
- 9: Verriegelungseinrichtung
- 10: Stützwand
- 11: Verriegelungselement
- 12: Verriegelungshaken
- 12': Drehbolzen
- 12": Aussparung
- 13: Bügelelement
- 14: Betätigungsgriff
- 15: Schieber
- 16: Anlaufschräge
- 17: Rückstellfeder
- 18: Träger
- 19: Rastmittel
- 20: Rastnase
- 21: Anlaufschräge
- 22: Rastöffnung
- 23: Drehbolzen
- 24: Lageraussparung
- 25: Lagerbolzen
- 26: Lageröffnung
- 27: Organoblech

## Patentansprüche

1. Fahrzeugsitz (1) für ein Kraftfahrzeug, mit einem Sitzgestell (2), an welchem ein Sitzteil (3) gelagert ist und welches an einem Fahrzeugboden befestigbar oder befestigt ist, mit wenigstens einem einer Unterseite des Sitzteils (3) zugeordneten Ablagefach, wobei das Sitzteil (3) zwischen einer das Ablagefach (8) verdeckenden Sitzposition und einer das Ablagefach (8) freigebenden Aufstellposition verschwenkbar gelagert ist, und mit einer Verriegelungseinrichtung (9) zum Verriegeln des Sitzteils (3) in der Sitzposition, wobei die Verriegelungseinrichtung (9) ein Verriegelungselement (11) und einen Betätigungsgriff (14) zum Bewegen des Verriegelungselements (11) von einer das Sitzteil (3) an dem Sitzgestell (2) arretierenden Arretierstellung in eine das Sitzteil (3) zum Verlagern freigebende Freigabestellung aufweist, **dadurch gekennzeichnet, dass** das Sitzteil (3) eine Sitzwanne (5) aufweist, wobei die Verriegelungseinrichtung (9) an der Sitzwanne (5) formschlüssig verrastet ist, und dass die Sitzwanne (5) mehrere Stützwände (10) aufweist, auf welche die Verriegelungseinrichtung (9) aufgesteckt oder aufgelegt ist.

2. Fahrzeugsitz nach Anspruch 1, **dadurch gekennzeichnet, dass** die Verriegelungseinrichtung (9) nur durch zumindest bereichsweise elastisch verformbare Rastmittel (19) an der Sitzwanne (5) befestigt ist.

3. Fahrzeugsitz nach einem der vorhergehenden Ansprüche, **dadurch gekennzeichnet, dass** der Betätigungsgriff (14) einen Drehbolzen (23) aufweist, der in einer randoffenen Lageröffnung von zumindest zwei einander gegenüberliegend angeordneten Stützwänden (10) drehbar gelagert ist.

4. Fahrzeugsitz nach einem der vorhergehenden Ansprüche, **dadurch gekennzeichnet, dass** die Verriegelungseinrichtung (9) einen Träger (18) aufweist, der auf mehreren der Stützwände (10) direkt oder indirekt aufliegt und einen Schieber (15) lagert, der mit dem Betätigungsgriff (14) einerseits und mit dem Verriegelungselement (11) andererseits wirkverbunden ist.

5. Fahrzeugsitz nach Anspruch 4, **dadurch gekennzeichnet, dass** der Träger (18) eine Schienenführung für den Schieber (15) bildet.

6. Fahrzeugsitz nach Anspruch 4 oder 5, **dadurch gekennzeichnet, dass** der Schieber (15) zwischen dem Träger (18) einerseits und der Sitzwanne (5) andererseits verschiebbar geführt ist.

7. Fahrzeugsitz nach einem der Ansprüche 4 bis 6, **dadurch gekennzeichnet, dass** der Träger (18) mehrere elastisch verformbare Rastnasen (20) als Rastmittel (19) aufweist, die in Rastöffnungen (22) der Sitzwanne (5), insbesondere der Stützwände (10), eingreifen.

8. Fahrzeugsitz nach einem der Ansprüche 4 bis 7, **dadurch gekennzeichnet, dass** das Verriegelungselement (9) ein Verriegelungshaken (12) ist, der dazu ausgebildet ist, mit einem an dem Sitzgestell (2) befestigten Sitzbügel (13) zusammenzuwirken, wobei der Verriegelungshaken (12) durch den Betätigungsgriff (14) und den Schieber (15) in die Freigabestellung verschwenkbar ist.

9. Fahrzeugsitz nach Anspruch 8, **dadurch gekennzeichnet, dass** der Verriegelungshaken (12) durch den Schieber (15) nur mit einer Druckkraft beaufschlagbar ist.

10. Fahrzeugsitz nach einem der vorhergehenden Ansprüche, **dadurch gekennzeichnet, dass** die Verriegelungseinrichtung (9) zumindest eine Rückstellfeder (17) aufweist, die einer Betätigung des Betätigungsgriffs (14) entgegenwirkt.

11. Fahrzeugsitz nach einem der Ansprüche 4 bis 10, **dadurch gekennzeichnet, dass** die Rückstellfeder (17) an der Sitzwanne (5) einerseits und an einem von dem Betätigungsgriff (14) abgewandten Ende des Schiebers (15) andererseits befestigt und als Zugfeder ausgebildet ist.

12. Fahrzeugsitz nach einem der vorhergehenden Ansprüche, **dadurch gekennzeichnet, dass** die Sitzwanne (5) insbesondere einstückig mit den Stützwänden (10) aus Kunststoff gefertigt ist.

13. Fahrzeugsitz nach einem der vorhergehenden Ansprüche, **dadurch gekennzeichnet, dass** an der Sitzwanne (5) zumindest ein Verstärkungsblech, insbesondere Organoblech (27), angeordnet ist.

14. Fahrzeugsitz nach Anspruch 13, **dadurch gekennzeichnet, dass** die Sitzwanne (5) an das Organoblech (27) angespritzt ist.

## Claims

1. Vehicle seat (1) for a motor vehicle, having a seat frame (2) on which a seat part (3) is mounted and which is fastenable or fastened to a vehicle floor, having at least one storage compartment which is assigned to an underside of the seat part (3), wherein the seat part (3) is mounted pivotably between a sitting position covering the storage compartment (8) and an upright position opening up the storage compartment (8), and having a locking device (9) for locking the seat part (3) in the sitting position, wherein the locking device (9) has a locking element (11) and an actuating handle (14) for moving the locking element (11) from a retaining position retaining the seat part (3) on the seat frame (2) into a release position releasing the seat part (3) in order to move same, **characterized in that** the seat part (3) has a seat pan (5), wherein the locking device (9) is latched in an interlocking manner on the seat pan (5), and **in that** the seat pan (5) has a plurality of supporting walls (10) on which the locking device (9) is plugged or placed.

2. Vehicle seat according to Claim 1, **characterized in that** the locking device (9) is fastened to the seat pan (5) only by latching means (19) which are elastically deformable at least in regions.

3. Vehicle seat according to either of the preceding claims, **characterized in that** the actuating handle (14) has a pivot pin (23) which is mounted rotatably in an open-edged bearing opening of at least two supporting walls (10) arranged opposite one another.

4. Vehicle seat according to one of the preceding claims, **characterized in that** the locking device (9) has a carrier (18) which rests directly or indirectly on a plurality of the supporting walls (10) and supports a slider (15) which is operatively connected to the actuating handle (14) at one end and to the locking element (11) at the other end.

5. Vehicle seat according to Claim 4, **characterized in that** the carrier (18) forms a rail guide for the slider (15) .

6. Vehicle seat according to Claim 4 or 5, **characterized in that** the slider (15) is guided displaceably between the carrier (18) at one end and the seat pan (5) at the other end.

7. Vehicle seat according to one of Claims 4 to 6, **characterized in that** the carrier (18) has a plurality of elastically deformable latching lugs (20) as latching means (19) which engage in latching openings (22) in the seat pan (5), in particular in the supporting walls (10).

8. Vehicle seat according to one of Claims 4 to 7, **characterized in that** the locking element (9) is a locking hook (12) which is designed to interact with a seat bracket (13) fastened to the seat frame (2), wherein the locking hook (12) is pivotable into the release position by means of the actuating handle (14) and the slider (15).

9. Vehicle seat according to Claim 8, **characterized in that** the locking hook (12) can be acted upon by the slider (15) only with a compressive force.

10. Vehicle seat according to one of the preceding claims, **characterized in that** the locking device (9) has at least one restoring spring (17) which acts counter to an actuation of the actuating handle (14).

11. Vehicle seat according to one of Claims 4 to 10, **characterized in that** the restoring spring (17) is fastened to the seat pan (5) at one end and to an end of the slider (15) facing away from the actuating handle (14) at the other end and is designed as a tension spring.

12. Vehicle seat according to one of the preceding claims, **characterized in that** the seat pan (5) is manufactured from plastic in particular integrally with the supporting walls (10).

13. Vehicle seat according to one of the preceding claims, **characterized in that** at least one reinforcing sheet, in particular organic sheet (27), is arranged on the seat pan (5).

14. Vehicle seat according to Claim 13, **characterized in that** the seat pan (5) is injection moulded on the organic sheet (27).

## Revendications

1. Siège de véhicule (1) pour un véhicule automobile, comprenant un châssis de siège (2) sur lequel est montée une partie de siège (3) et qui peut être fixé ou qui est fixé à un plancher de véhicule, comprenant au moins un compartiment de rangement associé à un côté inférieur de la partie de siège (3), la partie de siège (3) étant montée de manière à pouvoir être amenée à pivoter entre une position assise recouvrant le compartiment de rangement (8) et une position relevée libérant le compartiment de rangement (8), et comprenant un dispositif de verrouillage (9) pour verrouiller la partie de siège (3) dans la position assise, le dispositif de verrouillage (9) présentant un élément de verrouillage (11) et une poignée d'actionnement (14) pour déplacer l'élément de verrouillage (11) d'une position de blocage bloquant la partie de siège (3) sur le châssis de siège (2) à une position de libération libérant la partie de siège (3) pour le déplacement, **caractérisé en ce que** la partie de siège (3) présente un bac de siège (5), le dispositif de verrouillage (9) étant encliqueté par complémentarité de forme sur le bac de siège (5), et **en ce que** le bac de siège (5) présente plusieurs parois d'appui (10) sur lesquelles le dispositif de verrouillage (9) est enfiché ou posé.

2. Siège de véhicule selon la revendication 1, **caractérisé en ce que** le dispositif de verrouillage (9) est fixé au bac de siège (5) uniquement par des moyens d'encliquetage (19) déformables élastiquement au moins par zones.

3. Siège de véhicule selon l'une quelconque des revendications précédentes, **caractérisé en ce que** la poignée d'actionnement (14) présente un pivot (23) qui est monté de manière rotative dans une ouverture de palier ouverte sur le bord d'au moins deux parois d'appui (10) agencées l'une en face de l'autre.

4. Siège de véhicule selon l'une quelconque des revendications précédentes, **caractérisé en ce que** le dispositif de verrouillage (9) présente un support (18) qui repose directement ou indirectement sur plusieurs des parois d'appui (10) et supporte un coulisseau (15) qui est relié fonctionnellement à la poignée d'actionnement (14) d'une part et à l'élément de verrouillage (11) d'autre part.

5. Siège de véhicule selon la revendication 4, **caractérisé en ce que** le support (18) forme un guide à rail pour le coulisseau (15).

6. Siège de véhicule selon la revendication 4 ou 5, **caractérisé en ce que** le coulisseau (15) est guidé de manière coulissante entre le support (18) d'une part et le bac de siège (5) d'autre part.

7. Siège de véhicule selon l'une quelconque des revendications 4 à 6, **caractérisé en ce que** le support (18) présente plusieurs ergots d'encliquetage (20) déformables élastiquement en tant que moyens d'encliquetage (19) qui s'engagent dans des ouvertures d'encliquetage (22) du bac de siège (5), notamment des parois d'appui (10).

8. Siège de véhicule selon l'une quelconque des revendications 4 à 7, **caractérisé en ce que** l'élément de verrouillage (9) est un crochet de verrouillage (12) qui est configuré pour coopérer avec un étrier de siège (13) fixé au châssis de siège (2), le crochet de verrouillage (12) pouvant être amené à pivoter dans la position de libération par la poignée de commande (14) et le coulisseau (15).

9. Siège de véhicule selon la revendication 8, **caractérisé en ce que** le crochet de verrouillage (12) ne peut être soumis qu'à une force de pression par le coulisseau (15).

10. Siège de véhicule selon l'une quelconque des revendications précédentes, **caractérisé en ce que** le dispositif de verrouillage (9) présente au moins un ressort de rappel (17) qui s'oppose à un actionnement de la poignée d'actionnement (14).

11. Siège de véhicule selon l'une quelconque des revendications 4 à 10, **caractérisé en ce que** le ressort de rappel (17) est fixé au bac de siège (5) d'une part et à une extrémité du coulisseau (15) détournée de la poignée d'actionnement (14) d'autre part et est configuré sous forme de ressort de traction.

12. Siège de véhicule selon l'une quelconque des revendications précédentes, **caractérisé en ce que** le bac de siège (5) est fabriqué en matière plastique, notamment d'un seul tenant avec les parois d'appui (10).

13. Siège de véhicule selon l'une quelconque des revendications précédentes, **caractérisé en ce qu'**au moins une tôle de renfort, notamment une tôle organique (27), est agencée sur le bac de siège (5).

14. Siège de véhicule selon la revendication 13, **caractérisé en ce que** le bac de siège (5) est moulé par injection sur la tôle organique (27).
